# EUROPEAN PATENT APPLICATION

(11) **EP 1 980 541 A1**
(43) Date of publication of application: **15.10.2008**
(21) Application number: 07707503.4
(22) Date of filing: 26.01.2007
(51) Int. Cl.: C04B 24/12, C04B 24/26, C04B 24/28, C04B 103/40

(54) **CEMENT DISPERSING AGENT**

(30) Priority: 26.01.2006 JP 2006018115
(71) Applicant: Sika Ltd., Hiratsuka-shi, Kanagawa 254-0021 (JP); TOHO CHEMICAL INDUSTRY CO., LTD., Tokyo 104-0044 (JP)
(72) Inventor: BANDOH, Hirofumi, Hiratsuka-shi Kanagawa 254-0021 (JP); SAITOH, Kaname, Hiratsuka-shi Kanagawa 254-0021 (JP); TOMOYOSE, Tetsu, Hiratsuka-shi Kanagawa 254-0021 (JP); KOBAYASHI, Atsushi, Kanagawa 254-0021 (JP); IKEDA, Akira, Sodegaura-shi Chiba 299-0266 (JP); SUGA, Akira, Sodegaura-shi Chiba 299-0266 (JP); OKADA, Tomohisa, Sodegaura-shi Chiba 299-0266 (JP)
(74) Representative: Schaad, Balass, Menzl & Partner AG
(86) International application number: PCT/JP2007/051271
(87) International publication number: WO 2007/086507

(57) **Abstract**

There is provided a cement dispersing agent and a concrete admixture which have good influence on workability (such as little setting retardation and low concrete viscosity), and are excellent in slump-loss reduction. The cement dispersing agent agent comprises an alkylene oxide modified water-soluble polymer having a structure composed of: a polymer skeleton containing a water-soluble polycarboxylic acid polymer grafted and/or crosslinked with a compound having amino and imino groups and/or a compound having amino, imino and amido groups; and an alkylene oxide that is further added to the polymer skeleton, and the concrete admixture comprises the cement dispersing agent and other admixture.

## Description

### TECHNICAL FIELD

The present invention relates to a cement dispersing agent having a small slump-loss.

### BACKGROUND ART

Conventionally, for the purpose of securing the fluidity of a cement composition such as concrete, a ligninsulfonate, a naphthalenesulfonic acid-formaldehyde condensate salt, a melaminesulfonic acid-formaldehyde condensate salt have been used as a cement dispersing agent. However, by the above cement dispersing agents, the cement composition has been faced with such a problem that the dispersing performance was not satisfactory and the slump loss was extremely large.
In recent years, a high performance AE water reducing agent represented by a polycarboxylic acid-based polymer has become widely prevalent as an admixture combining high water reducing performance with slump loss reducing effect. It is innate characteristic of the high performance AE water reducing agent to exhibit more excellent water reducing performance than that of a conventional cement dispersing agent, however, it has also such characteristic that when it is used in the range of an appropriate amount, it can reduce the slump loss substantially without affecting the setting retardation of the cement. Such a performance which is not seen in other agents is at an important positioning. The reduction of slump loss leads to an effect of enabling the retention of the fluidity of the concrete in the period of transportation and pouring of fresh concrete and gains recognition in terms of a long-term transportation by an agitator vehicle, a pump pressure feed, filling property of the concrete into a closely bar-arranged formwork or into a place into which the concrete can be difficultly filled.

As a cement dispersing agent for improving the slump loss, various techniques thereof are published. A cement admixture using a hydrolysis-type crosslinked polymer utilizing an alkali condition in a cement dispersion (Patent Documents 1 and 2), a sustained-release cement admixture containing a polysuccinic imide (Patent Document 3) etc. are disclosed as a technique of a cement dispersing agent by which the dispersing property is increased with time. In addition, as a compound containing nitrogen atom(s) in a chemical structure of a cement dispersing agent, techniques of Patent Documents 4 to 6 were disclosed. In recent years, following the upsizing of buildings, by longer transportation time, longer pump pressure-feeding distance, and longer pouring time, the requirement for improving the slump loss has become stricter than ever and the development of agents capable of responding to the strict requirement has been desired.
Patent Document 1: Japanese Patent Application Publication No. JP-A-03-075252
Patent Document 2: Japanese Patent Application Publication No. JP-A-06-157100
Patent Document 3: Japanese Patent Application Publication No. IP-A-08-169741
Patent Document 4: Japanese Patent No. 3235002
Patent Document 5: Japanese Patent No. 3336456
Patent Document 6: Japanese Patent Application Publication No. JP-A-2004-210587

### DISCLOSURE OF THE INVENTION

### [Problems to Be Solved by the Invention]

In order to solve the problems described above, it is an object of the present invention to provide a cement dispersing agent which has good influence on workability (such as little setting retardation and low concrete viscosity), and is excellent in slump-loss reduction.

### [Means for Solving the Problem]

The inventors of the present invention has found the above-described problem can be solved by using a cement dispersing agent containing an alkylene oxide modified water-soluble polymer having a structure composed of: a polymer skeleton containing a water-soluble polycarboxylic acid polymer grafted and/or crosslinked with a compound having amino and imino groups and/or a compound having amino, imino and amido groups; and an alkylene oxide that is further added to the polymer skeleton, and completed the present invention.

The present invention also relates to the above-described arrangement in which the compound having amino and imino groups is a polyalkylene polyamine; the compound having imino, imino and amido groups is a polyalkylene polyamine; the polyalkylene polyamine includes a polyalkylene polyamine to which a polyalkylene oxide is added; the polyamine polyamine includes a polyamide polyamine to which a polyalkylene oxide is added.
The present invention also relates to the above-described arrangement in wihch the polyalkylene polyamines or the polyamide polyamine has a molecular weight of 900 to 10,000.

The present invention also relates to the above-described arrangement in which the water-soluble polycarboxylic acid polymer has at least one substituent selected from a group containing (anhydrous) carboxylic acid group and salts thereof, a polyoxyalkylene group, a carboxylic acid alkyl ester group, an alkyl group and a glycidyl group, and further in this arrangement, the water-soluble polycarboxylic acid polymer is a water-soluble copolymer produced by copolymerizing monomers, as main components, represented by the general formulae (1) and (2): 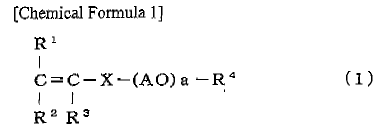 in which R¹, R², R³, and R⁴ independently represent a hydrogen atom or a (C1-22) hydrocarbon group; X represents -COO-, -CON<, -(CH₂)_{b}O-; AO represents a (C2-4) alkylene oxide group; a represents an average molar number of an added alkylene oxide of 1 to 200; and b represents 1 to 20, 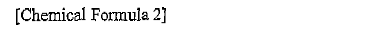 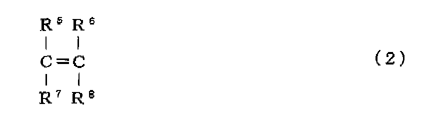 in which R⁵, R⁶, R⁷, and R⁸ independently represent a hydrogen atom or a (C1-22) hydrocarbon group, -(CH₂)_{c} COOM, -COOM, -COOR⁹ (in which R⁹ represents a (C1-22) hydrocarbon group, -(CH₂)_{c}-COOM, -COOM or a glycidyl group) or a glycidyl group, or R⁵ and R⁶ or R⁷ and R⁸ together with a >C=C< group in the formula (2) form an acid anhydride; c represents 1 to 20; and M represents a hydrogen atom, an alkali metal, an alkaline earth metal, ammonium or an alkanolamine.

The present invention also relates to the above-described arrangement in which the alkylene oxide further added to the skeleton is a (C2-4) alkylene oxide.
The present invention also relates to the above-described arrangement in which in the component represented by the general formula (1) which is a monomer component of the water-soluble polycarboxylic acid polymer, the average added molar number of the alkylene oxide is 30 to 150 and the average added molar number of the alkylene oxide added to the polyalkylene polyamine or the polyamide polyamine is 0.1 mol to 10 mol relative to 1 mol of the total of an amino group and an imino group and optionally an amido group.

The present invention further relates to a concrete admixture containing the above-described cement dispersing agent, and an admixture such as a cement dispersing agent other than the above cement dispersing agent, an air-entraining agent, a setting retarder, an accelerator, a separation-diminishing agent, a thickener, an antifoamer and a contraction-diminishing agent.

### [Effects of the Invention]

According to the present invention, a cement dispersing agent and a concrete admixture which have good influence on workability (such as little setting retardation and low concrete viscosity), and are excellent in slump-loss reduction can be provided, and thus, even at the execution of work after a long-term transportation, advantageous workability becomes possible to be provided.

### BEST MODES FOR CARRYING OUT THE INVENTION

Hereinafter, the present invention will be more specifically described including the story until the completion of the present invention.
Nowadays, the execution of work using a high performance AE water reducing agent has started to be rapidly spread. In particular, characteristics of a polycarboxylic acid-based dispersing agent such as excellent water reducing property and slump-loss reducing effect are fully used, and the recognition of such characteristics becomes firmly fixed. Thus, a working method utilizing the polycarboxylic acid-based dispersing agent has increased. The polycarboxylic acid-based dispersing agent is used in the production of not only a high strength concrete, but also a concrete or a concrete product having a general-purpose strength, and is used further in the production of mixed cement such as a blast furnace cement, a fly ash cement and a silica cement. Following such a diversification of the application of the dispersing agent, for the polycarboxylic acid-based dispersing agent, such a countermeasure has become demanded that the concrete can secure a certain workability also in each case (application).
Particularly, the performance "excellent in slump-loss reduction" is an agent performance enabling to impart to the concrete the excellent workability capable of coping with the longer transportation time and the longer working time due to the upsizing of the buildings. Therefore, when the concrete can be maintained for a long time in such a state that the concrete is excellent in the concrete viscosity within a range in which the setting is not affected, the problems such as pump pressure-feeding property, filling property and separation resistance during the concrete pouring can be solved and a high quality hardened concrete can be easily obtained, so that the investigation of a new polycarboxylic acid-based dispersing agent was promoted.
Described above is the story until to the completion of the present invention.

The cement dispersing agent of the present invention contains an alkylene oxide modified water-soluble polymer having a structure composed of: both a polymer skeleton containing a water-soluble polycarboxylic acid polymer grafted and/or crosslinked with a compound having amino and imino groups and/or a compound having amino, imino and amido groups; and an alkylene oxide further added to the skeleton, and by using the cement dispersing agent of the present invention, a concrete having a small slump-loss can be obtained.

In the present invention, the alkylene oxide modified water-soluble polymer has a structure shown in the following scheme; 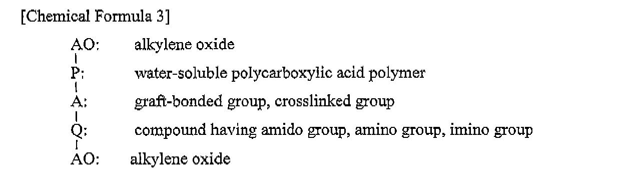 in which P represents a water-soluble polycarboxylic acid polymer; A represents a graft-bonded group or crosslinked group; Q represents a compound having amino and imino groups and/or a compound having ammo, incline and amido groups; AO represents an alkylene oxide; and -P-A-Q- represents a polymer skeleton.

In the present invention, the compound having amino and imino groups or the compound having amino, imino and amido groups which are to be bonded to the water-soluble polycarboxylic acid polymer is a compound having in the unit structure thereof, an amino group which is a primary amine and an imino group which is a secondary amine and optionally an amido group (not essential) formed by the condensation of a carboxylic acid and an amino group or an imino group each in an amount of at least 1 mol relative to 1 mol of the unit structure.
The above compounds may be any one of a low molecular weight compound and a polymer compound. Examples of the above compound as a low molecular weight compound include aliphatic, alicyclic and aromatic amines such as ethylamine, ethyleneamine, diethylamine and aniline; heterocyclic amines such as 1-benzofuran-2-yl-amine and 4-quinolyl-amine; aliphatic imines such as hexilideneamine and isopropylideneamine; aliphatic, alicyclic and aromatic amide such as acetoamide, benzamide and a lactam; compounds derived from hydroxyl amine, acid amides etc. and having amino and imino groups and/or having amino, imino and amido groups; and further adducts in which to the above compounds, a functional group containing oxygen atom(s) or nitrogen atom(s) such as an alkylene oxide and a halogen (fluorine, bromine, iodine)-containing substituent is added. Examples of the above compounds as a polymer compound include compounds produced by polymerizing one type or two or more types of, the above-exemplified compounds, which can be derived to the above low molecular weight compounds; polyalkylene polyamines; and polyamide polyamines.
The above-described compound has a molecular mass of 900 to 10,000, preferably 900 to 3,000, more preferably 900 to 2,000. In this case, the above compound is specifically a polyalkylene polyamine or a polyamide polyamine and includes each of them to which a polyalkylene oxide is added.

Examples of the polyalkylene polyamines include ethylenediamine; diethylenetriamine; triethylenetetramine; tetraethylenepentamine; pentaethylenehexamine; hexaethyleneheptamine; mixtures of polymers polyethylene polyamines which are mixtures containing ethylene units and nitrogen atoms in a large amount; polymers of cyclic imines such as polyethyleneimine, polypropyleneimine, poly-3-methyl-propylimine, poly-2-ethyl-propylimine; and polymers of unsaturated amines such as polyvinylamine and polyallylamine. Further, the polyalkylene polyamines may be copolymers produced by copolymerizing a cyclic imine such as ethyleneimine, propyleneimine, 3-methyl-propyleneimine and 2-ethyl-propyleneimine, or unsaturated amides or unsaturated imides such as N-vinylacetamide, N-vinyl-formamide and N-vinyl-phthalimide with an unsaturated compound copolymerizable with the above compounds. Examples of the unsaturated compound copolymerizable with a cyclic imine, an unsaturated amide, an unsaturated imide etc. include dimethylacrylamide; styrene; methyl acrylate; methyl methacrylate; acrylic acid; methacrylic acid; styrenesulfonic acid; salts of these compounds; cyclic sulfide compounds such as ethylenesulfide and propylenesulfide; cyclic ethers such as oxetane, mono- or bisalkyloxetanes, mono- or bisalkylchloromethyloxetanes, tetrahydrofuran and mono- or bisalkyltetrafluorofurans; cyclic formals such as 1,2-dioxofuran and trioxofuran; and N-substituted alkylimines such as N-methyl-ethyleneimine.

The polyalkylene polyamine to which a polyalkylene oxide is added is a compound produced by copolymerizing at least two molecules of the above polyalkylene polyamine and at least one molecule of the alkylene oxide. At least two molecules of the polyalkylene polyamine constituting the polyalkylene polyamine copolymer may be the same as or different from each other. Examples of the alkylene oxide include ethylene oxide, propylene oxide and butylene oxide and these compounds may be used as a mixture thereof. Among the above alkylene oxides, from the viewpoint of enhancing the water reducing effect, ethylene oxide is preferred. When the polyalkylene polyamine copolymer is produced by copolymerizing two molecules of polyalkylene polyamine with two or more molecules of alkylene oxide, the alkylene oxides may form a polyoxyalkylene chain in which alkylene oxides are addition-polymerized to each other. The alkylene oxide may be used individually or in combination of two or more types thereof and when the polyoxyalkylene chain is formed using two types or more of the alkylene oxide, such two types or more of the alkylene oxide constituting the polyoxyalkylene chain may be block-polymerized or random-polymerized. Additionally, when two or more polyoxyalkylene chains are present in one molecule of the polyalkylene polyamine copolymer, the polyoxyalkylene chains may be the same as or different from each other.

In addition, examples of the polyamide polyamines include compounds produced by condensation-polymerizing the above polyalkylene polyamine with a dibasic acid, a dibasic acid anhydride, a dibasic acid ester or a dibasic acid dihalide through an amide bond. Examples of the dibasic acids include aliphatic saturated dibasic acids having a total carbon number of 2 to 10 such as oxalic acid, malonic acid, succinic acid, glutaric acid, adipic acid, pimelic acid, suberic acid, azelaic acid and sebacic acid. Examples of the dibasic acid anhydrides include anhydrides of the above dibasic acids. Examples of the dibasic acid esters include monomethyl esters, monomethyl esters, monobutyl esters, monopropyl esters, dimethyl esters, diethyl esters, dibutyl esters and dipropyl esters of the above dibasic acids. Examples of the dibasic acid halides include dichlorides, dibromides and diiodides of the above dibasic acid.

The polyamide polyamine to which a polyalkylene oxide is added represents a compound in which an alkylene oxide is added to an amino group, an imino group or an amido group in one molecule of the above polyamide polyamine. Examples of the alkylene oxides include ethylene oxide, propylene oxide and butylene oxide and these compounds may be used individually or in combination. When two types or more of alkylene oxides are used, such alkylene oxides may be block-polymerized or random-polymerized.

The above polyalkylene polyamine, polyalkylene polyamine to which polyalkylene oxide is added, polyamide polyamine and polyamide polyamine to which polyalkylene oxide is added (hereinafter, such a polyamine is referred to as a "polyamine derivative") have preferably one or more reactive group (amino group, imino group, amido group etc.) for bonding to the polycarboxylic acid polymer in one molecule of the polymer and further, in the polyamine derivatives, there is preferably remained a reactive group reactable with an alkylene oxide besides the reactive group for bonding to the polycarboxylic acid polymer.

The water-soluble polycarboxylic acid polymer grafted and/or crosslinked with a polyamine derivative used in the present invention is not particularly limited so long as the polymer has a group to be bonded to the polyamine derivative through graft and/or crosslinking. Examples of the functional groups which can be bonded to the polyamine derivative include acid groups, acid anhydride groups, a glycidyl group and acid ester groups, and the polycarboxylic acid polymer has preferably such functional groups in an amount of 1 to 40% by mass based on the solid mass of the polycarboxylic acid polymer. In addition, the polycarboxylic acid polymer has preferably the function as a cement dispersing agent. So long as there is remained a functional group which can be bonded to the polyamine derivative in the polycarboxylic acid polymer, whether the polycarboxylic acid polymer is in an acid form or in a neutralized form does not particularly cause a problem. Specific examples of the polycarboxylic acid-based dispersing agent include copolymers of maleic acid anhydride and a polyalkyleneglycolmonoalkenylether, copolymers of maleic acid anhydride and an allylalcohol alkylene oxide adduct monomethylether, copolymers of (meth)acrylic acid and an (alkoxy) polyalkyleneglycol (meth)acrylate, copolymers of (meth)acrylic acid, glycidyl (meth)acrylate and an (alkoxy) polyalkyleneglycol (metli)acrylate, copolymers of (meth)acrylic acid, a monomer having a sulfone group and an (alkoxy) polyalkyleneglycol (meth)acrylate, copolymers of (meth)acrylic acid, a monomer having a phosphate group and an (alkoxy) polyalkyleneglycol (meth)acrylate and copolymer of (meth)acrylic acid, a (meth)acrylic acid alkyl ester and an (alkoxy) polyalkyleneglycol (meth)acrylate.

The water-soluble polycarboxylic acid polymer used in the present invention is a copolymer produced by copolymerizing monomers represented by the following general formulae (1) and (2) as main components.
In the monomer represented by the following general formula (1), R¹, R², R³, and R⁴ independently represent a hydrogen atom or a (C1-22) hydrocarbon group; X represents -COO-, -CON<, -(CH₂)_{b}O-; AO represents a (C2-4) alkylene oxide group; a represents an average added molar number of an alkylene oxide of 1 to 200, more preferably 30 to 150; and b represents 1 to 20 when X is -(CH₂)_{b}O- 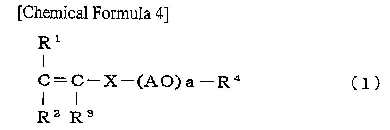 Specific examples of the component represented by the above general formula (1) include polyalkyleneglycol-based monomers having a polymerization-activity which have a polymerization-active group and polyalkyleneglycol as constituting units, for example, alkenylethers formed from an (alkoxy) alkyleneglycol and a (C3-8) alkenylether such as polyalkyleneglycolmonoallylether, alkyleneglycolmonoalkenylether, methoxypolyalkyleneglycolmonoallylether and methoxyalkyleneglycolmonoalkenylether; alkoxyalkyleneglycol (meth)acrylates of a (C-22) alkoxypolyalkyleneglycol (meth)acrylate, such as methoxypolyalkyleneglycol, ethoxypolyalkyleneglycol and propylpolyalkyleneglycol; alkoxyalkyleneglycol unsaturated aliphatic acid esters formed from a (C1-22) (alkoxy) polyalkyleneglycol and oleic acid; alkoxyalkyleneglycolamide compounds formed from α-alkoxy-ω-amino-polyalkyleneglycol having a terminal amino group and (meth)acrylic acid or an unsaturated aliphatic acid; and unsaturated aliphatic ethers which are unsaturated aliphatic alcohol alkylene oxide adducts. The composition of the polyalkyleneglycol is formed from a (C2-3) alkylene oxide and is produced by an individual addition or mixed addition of ethylene oxide, propylene oxide and/or butylene oxide, and the mixed addition may be a random addition or block addition. These polyalkylene glycol monomers having polymerization activity may be used individually or in combination.

Further, in the monomer represented by the following general formula (2), R⁵, R⁶, R⁷, R⁸ independently represent a hydrogen atom or a (C1-22) hydrocarbon group, -(CH₂)_{c}-COOM, -COOM, -COOR⁹ (in which R⁹ represents a hydrogen atom, a (C1-22) hydrocarbon group, -(CH₂)_{c}COOM or -COOM) or a glycidyl group, or R⁵ and R⁶ or R⁷ and R⁸ together with a >C=C< group in the formula (2) form an acid anhydride; c represents 1 to 20 in the case of -(CH₂)_{c}COOM; and M represents a hydrogen atom, an alkali metal, an alkaline earth metal, ammonium or an alkanolamine. 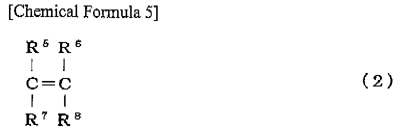 Specific examples of the component represented by the above general formula (2) include unsaturated aliphatic acids and esters thereof such as maleic acid, maleic anhydride, itaconic acid, methacrylic acid, acrylic acid, maleic acid dialkyl esters, methacrylic acid alkyl esters and acrylic acid alkyl esters; and a glycidyl compounds such as methacrylic acid glycidyl, acrylic acid glycidyl and glycidyl allyl ether. These compounds may be in an acid form or in a neutralized form and used for the neutralization include sodium, potassium, calcium, magnesium, ammonium ions, and alkanolamine. These acids or neutralized salts may be used individually or in combination.

Examples of the monomer component other than the components represented by the above general formulae (1) and (2) include the following known components, (non)aqueous-type monomers such as styrene; anion-type monomers such as vinylsulfonic acid, styrenesulfonic acid, (meth)acrylic acid phosphate ester salts and phosphate ester salts of (meth)acrylic acid alkylene oxide adducts; amide-type monomers such as acrylamide, acrylamide alkylene oxide adduct and polyamide polyamine compounds; amine-type monomers such as polyalkylene polyimine compounds; and polyalkyleneglycol monomers such as a mono- or diester between polyalkyleneglycol and maleic anhydride, and an ester between polyalkyleneglycol and itaconic acid. These monomers may be used in a range in which the performance of the cement dispersing agent of the present invention containing the monomers represented by the general formulae (1) and (2) is not impaired in an amount of 0 to around 20% by mass based on the total mass of the all monomers containing the monomers represented by the general formulae (1) and (2) and other monomers.

The water-soluble polycarboxylic acid polymer used in the present invention is not particularly limited so long as it has a performance exhibiting cement dispersing property when it is individually used. However, the polymer should form a graft and/or crosslinking linkage with a compound having an amino group and an imino group and /or a compound having an amino group, an imino group and an amido group, so that the polymer needs to have a functional group reactable with at least one of an amino group, an imino group and an amido group in a specific amount. This functional group is the above acid group, glycidyl group, acid anhydride group or acid ester group, and it is preferred that this functional group is remained in an amount of 40% by mass or less, more preferably 20% by mass or less relative to 100% by mass of the solid content of the water-soluble polycarboxylic acid polymer.

As a method for obtaining an alkylene oxide modified water-soluble polymer having a structure composed of: both a polymer skeleton containing a water-soluble polycarboxylic acid polymer grafted and/or crosslinked with a compound having amino and imino groups and/or a compound having amino, imino and amido groups; and a polyalkylene oxide moiety bonded to the skeleton which moiety is formed by the addition reaction of an alkylene oxide (hereinafter, for example the case where a polyamine derivative is used is described), various method can be employed.
The method may be, for example a method in which first, the above polyamine derivative is grafted and/or crosslinked to the water-soluble polycarboxylic acid polymer and then, to the resultant product, an alkylene oxide is further added, or a method in which an alkylene oxide is added to the above polyamine derivative to form a polyamine derivative alkylene oxide adduct and this adduct is grafted and/or crosslinked to the water-soluble polycarboxylic acid polymer.

As one example, a method in which the above polyamine derivative is grafted and/or crosslinked to the water-soluble polycarboxylic acid polymer and then, to the resultant product, an alkylene oxide is further added to obtain an alkylene oxide modified water-soluble polymer is described as follows.
As the method for grafting and/or crosslinking the above polyamine derivative to the water-soluble polycarboxylic acid polymer, the bonding can be formed by an addition reaction or dehydrating-condensation reaction in the absence of solvent or in the presence of an organic solvent. However, as a method for obtaining the objective product economically and stably, there can be mentioned a method in which a water-soluble polycarboxylic acid polymer having a glycidyl group, an acid anhydride or an acid ester group is obtained in the absence of solvent and then, the above polyamine derivative is bonded thereto, or a method in which a water-soluble polycarboxylic acid polymer having a glycidyl group, an acid anhydride or an acid ester group is obtained in an aqueous solution and then, the above polyamines derivative is bonded thereto in the aqueous solution. At this time, there are generated a product in which the polyamine derivative is bonded to the water-soluble polycarboxylic acid polymer through the graft, a product in which the polyamine derivative is bonded to the water-soluble polycarboxylic acid polymer through crosslinking or a product mixture of a grafted product and a crosslinked product, however, each of them is within the scope of the present invention.

The ratio of the water-soluble polycarboxylic acid polymer and the above polyamine derivative grafted and/or crosslinked to the water-soluble polycarboxylic acid polymer is, in the solid mass ratio, preferably 60:40 to 99.9:0,1, more preferably 70:30 to 99.5:0.5, When the ratio is out of this range, a required performance cannot be obtained or a crosslinked structure is excessively formed, so that the cement dispersing ability is extremely lowered.

As the method used in the present invention for adding an alkylene oxide to the polymer skeleton formed through the bond produced by grafting and/or crosslinking the above polyamine derivative to the water-soluble polycarboxylic acid polymer, there can be mentioned a method in which an alkylene oxide is added in the absence of solvent, a method in which an alkylene oxide is added in the presence of a solvent and a method in which an alkylene oxide is added in an aqueous solution. At this time, a polymerization catalyst may be also added. Particularly, to a polymer skeleton in which an amino group, an imino group or an amido group is remained among the polymer skeleton to which the above polyamine derivative has been grafted and/or crosslinked, an alkylene oxide can be easily added in an aqueous solution.

At this time, examples of the alkylene oxide added include ethylene oxide, propylene oxide and butylene oxide, and these alkylene oxides may be added individually or mixed. The mixed addition may be a random addition or a block addition. The average added molar number of the alkylene oxide is varied depending on the amount of the functional group capable of being subjected to the addition reaction with the alkylene oxide in the polymer skeleton to which the above polyamine derivative is grafted and/or crosslinked, however, is preferably in a range of 0.1 mol to 10 mol relative to 1 mol of the total of the amino group and the imino group and optionally the amido group of the above polyamine derivative. Here in this case, the average added molar number means the total of the molar number of the alkylene oxide added after the graft and/or crosslinking between the water-soluble polycarboxylic acid polymer and the above polyamine derivative and the molar number of the alkylene oxide which has been added beforehand to the polyamine derivative before the graft and/or crosslinking. When the average added molar number is out of this range, the water reducing property is remarkably lowered or desired slump-loss reducing effect cannot be obtained.

The water-soluble polycarboxylic acid polymer used in the present invention has a weight average molecular mass (measured by a gel permeation chromatography, converted into that as polyethylene glycol) advantageously in the range of 1,000 to 500,000 and when it is out of this range, the water reducing property is remarkably lowered or desired slump-loss reducing effect cannot be obtained.

The cement dispersing agent of the present invention can contain besides the above-described water-soluble polycarboxylic acid polymer, unreacted components (for example, polyalkylene polyamines, polyamide polyamine, dibasic acids, alkylene oxides, polyalkylene glycol type monomers having polymerization activity, unsaturated aliphatic acids, unsaturated aliphatic acid esters, glycidyl compounds etc.) and by-products generated in the polymerization process, grafting process, crosslinking process, alkylene oxide addition process.

The present invention is also a concrete admixture containing besides the above water-soluble polycarboxylic acid polymer, suitable public-known public-used chemical admixtures corresponding to various concrete production conditions. Specific examples of the above admixture include cement dispersing agents other than the cement dispersing agents of the present invention, air-entraining agents, setting retarders, accelerators, separation-diminishing agents, thickeners, antifoamers and contraction-diminishing agents.
The concrete admixture of the present invention includes both a form of a concrete admixture prepared by blending a public-known admixture besides the cement dispersing agent of the present invention and a form of a concrete admixture prepared by adding separately the cement dispersing agent of the present invention and a public-known public-used admixture during the concrete production and by mixing finally these agents in the concrete. Hereinafter, the public-known public-used admixture will be exemplified.

The cement dispersing agents are to be used in an appropriate combination thereof corresponding to the production conditions of or the performance requirements for the concrete. The cement dispersing agent of the present invention is also in the same condition and is used individually as a cement dispersing agent or as the main agent thereof. It can be used as a modifying assistant for a cement dispersing agent exhibiting large slump-loss or can be used in combination with a cement dispersing agent exhibiting high initial water reducing property. As a public-known cement dispersing agent other than that of the present invention, there can be mentioned salts of polycarboxylic acid polymer disclosed in Examined Japanese Patent Application Nos. JP-B-58-038380 and JP-B-59-018338, Japanese Patent Nos. 2628486, 2774445, 3235002 and 3336456, and further, salts of naphthalenesulfonic acid formaldehyde condensate, salts of melaminesulfonic acid formaldehyde condensate, ligninsulfonate, sodium gluconate, sugar alcohol, sugars etc. are suitable for modifying the slump-loss. The blending ratio of the cement dispersing agent of the present invention and a cement dispersing agent other than that of the present invention is 1:99 to 99:1% by mass.

Specific examples of the air-entraining agents include <1> anion-type air-entraining agents, <2> nonion-type air-entraining agents and <3> amphoteric-type air-entraining agents. Examples of <1> anion-type air-entraining agents include sulfate ester salts of higher alcohols (or alkylene oxide adducts thereof), alkylbenzensulfonic cid salts, salts of resin soaps such as rosin soaps and phosphate ester salts of higher alcohols (or alkylene oxide adducts thereof). Examples of <2> nonion-type air-entraining agents include alkylene glycols, alkylene oxide adducts of higher alcohols, esters of aliphatic acids and alkylene glycols and alkylene glycol adducts of sugar alcohols. Examples of <3> amphoteric-type air-entraining agents containing anion and cation include alkylbetaine type, alkylamidebetaine type and amino acid-based amphoteric activating agent-type. The preferred amount of the air-entraining agent is 0.001 to 0.03% by mass based on the mass of the cement dispersing agent.

Examples of the setting retarder include: <1> inorganic setting retarders such as phosphate salts, silicofluorides, zinc oxide, zinc carbonate, zinc chloride, zinc monoxide, copper hydroxide, magnesia salts, borax and boron oxide; and <2> organic setting retarders such as phosfon derivatives, sugars and derivatives thereof, oxycarboxylic acid salts and ligninsulfonates. Specific examples thereof include: phosfon derivatives such as aminotri(methylenephosphonic acid), aminotri(methylenephosphonic acid) 5-sodium salt, 1-hydroxyethylidene-1,1-diphosphonic acid, diethylenetriaminepenta(methylenephosphonic acid), and phosphonic acid and derivatives of alkali metal salts and alkaline earth metal salts; sugars such as saccharose, maltose, raffinose, lactose, glucose, fructose, mannose, arabinose, xylose, abitose, lipose; and oxycarboxylic acid salts such as gluconic acid, citric acid, glucoheptonic acid, malic acid and tartaric acid and alkali metal salts and alkaline earth metal salts thereof. The preferred amount of the setting retarder is 0.01 to 1.5% by mass based on the mass of the binding material such as cement etc.

Examples of the accelerators include: inorganic accelerators represented by calcium chloride and calcium nitrite; and organic accelerators such as alkanolamine. The preferred amount of the accelerator is 0.5 to 5% by mass based on the mass of the binding material such as cement etc.

Examples of the thickener/separation reducing agent include: <1> cellulose-based water-soluble polymers such as cellulose ethers (MC etc.); <2> polyacrylamide-based water-soluble polymers such as polyacrylamides; <3> biopolymers such as curdlan and welan gum; and <4> nonion type thickeners such as aliphatic acid diesters of polyalkylene glycols and polyalkylene glycol urethane condensates. The preferred blending ratio of the thickener/separation reducing agent is 0.01 to 0.5% by mass based on the mass of the concrete composition.

Examples of the antifoamers include: non-ion type antifoamers such an aliphatic alcohol alkylene oxide adducts, aliphatic acid alkylene oxide adducts, alkylene oxide di-aliphatic acid esters, polyalcohol alkylene oxide adducts and polyalkylene polyamine alkylene oxide adducts; silicone-based antifoamers in which a silicone oil is emulsified; higher alcohols in which a higher alcohol is emulsified; and a mixture containing the above compound as a main component. The preferred amount of the antifoamer is 0.01 to 1% by mass based on the mass of the cement dispersing agent.

Examples of the contraction reducing agent include polyalkyleneglycols and lower alcohol alkylene oxide adducts and when these compounds are oleaginous, then these compounds will be emulsified to be used. The amount of the contraction reducing agent is 0 to 5% by mass based on the mass of the binding material such as cement etc.

It has not yet been elucidated how can be obtained excellent slump-loss preventing effect possessed by the cement dispersing agent of the present invention. As one assumption therefor, it can be considered that the alkylene oxide modified water-soluble polymer has a function of controlling the adsorption of air to the cement and such effect is exhibited, however, it is also considered that various mechanisms other than the above-described mechanism are present and the synergic effect of these mechanisms leads to the reduction of the slump-loss.

The amount of the cement dispersing agent of the present invention is varied depending on the formulation condition including the material of the concrete and generally, the cement dispersing agent is incorporated in an amount of 0.1 to 5.0% by mass as the solid content based on the mass of the cement. For obtaining water reducing property and slump-flow retention, the more the amount thereof is, the better. However, when the amount is too large, the setting retardation is caused and possibly, it leads to a curing failure. The using method thereof is like in the case of a general cement dispersing agent, and either the concentrate solution thereof is added during the concrete kneading, or the concentrate solution is diluted beforehand in a kneading liquid and the diluted solution is added. Or after the concrete or mortar has been kneaded, the cement dispersing agent may be added and the resultant mixture may be homogeneously kneaded again. Here, the components other than the cement dispersing agent are components for the concrete conventionally in common use and examples of such components include; cements such as ordinary Portland cements, high early strength Portland cements, low heat/moderate heat Portland cements and Portland blast furnace cements; aggregates such as fine aggregates and coarse aggregates; admixtures such as silica fume, calcium carbonate powder and blast furnace slag powder; an expanding material; and water.
In addition, examples of the admixtures other than the cement dispersing agent of the present invention which can be separately added during the preparation include the above-described publicly-known publicly-used air-entraining agents, setting retarders, accelerators, separation-diminishing agents, thickeners, antifoamers and contraction-diminishing agents and also these admixtures may be appropriately formulated. The formulation ratio of each admixture can be appropriately and easily determined according to the type of the admixture and the application of the cement.

### [Examples]

Next, the present invention is described more specifically referring to examples. Here, the present invention is obtained according to the above-described production method and should not be construed as limited by these examples.

### [Production Example 1-1 (production of polyamide polyamine A)]

Into a reaction vessel with a stirring apparatus, which is equipped with a nitrogen introducing tube and a water measuring tube with a condenser, 716 g of polyalkylene polyamine (trade name; Poly eight, manufactured by Tosoh Corporation) were charged and stirred while introducing nitrogen. Next, 263 g of adipic acid was gradually charged and after the completion of the charging, the temperature was elevated to 150°C. The reaction was effected continuously for 8 hours and at the time point the acid value of the reaction mixture became 10, the reaction was terminated. The dehydrated amount was 60 g. Next, 1855 g of water were charged to obtain 2774 g (solid content: 33%) of an aqueous solution of polyamide polyamine A.

### [Production Example 1-2 (production of polyamide polyamines B)]

Into a reaction vessel with a stirring apparatus, which is equipped with a nitrogen introducing tube, an ethylene oxide blowing tube and a water measuring tube with a condenser, 716 g of polyalkylene polyamine (trade name: Poly eight; manufactured by Tosoh Corporation) were charged and stirred while introducing nitrogen. Next, 263 g of adipic acid was gradually charged and after the completion of the charging, the temperature was elevated to 150°C. The reaction was effected continuously for 8 hours and at the time point the acid value of the reaction mixture became 10, the reaction was terminated. The dehydrated amount was 60 g. Next, 1234 g of water were charged to prepare an aqueous solution of polyamide polyamine and thereafter, the temperature was lowered to 60°C. While maintaining this temperature, 317 g of ethylene oxide were charged gradually and after the charging was completed, the reaction mixture was aged at the same temperature for one hour to obtain 2470 g (solid content: 50%) of an aqueous solution of polyamide polyamine B.

### [Production Example 1-3 (production of polyamide polyamine C)]

Into a reaction vessel with a stirring apparatus, which is equipped with a nitrogen introducing tube, an ethylene oxide blowing tube and a water measuring tube with a condenser, 516 g of diethylene triamine were charged and stirred while introducing nitrogen. Next, 585 g of adipic acid was gradually charged and after the completion of the charging, the temperature was elevated to 150°C. The reaction was effected continuously for 8 hours and at the time point the acid value of the reaction mixture became 12, the reaction was terminated, The dehydrated amount was 140 g. Next, 1115 g of water were charged to prepare an aqueous solution of polyamide polyamine and thereafter, the temperature was lowered to 60°C. While maintaining this temperature, 154 g of ethylene oxide were charged gradually and after the charging was completed, the reaction mixture was aged at the same temperature for one hour to obtain 2230 g (solid content: 50%) of an aqueous solution of polyamide polyamine C.

### [Production Example 1-4 (production of polyamide polyamine D)]

Into a reaction vessel with a stirring apparatus, which is equipped with a nitrogen introducing tube, a thermometer and a condenser, 103 g of diethylene triamine and 125 g of adipic acid were charged and stirred while introducing nitrogen. The temperature was elevated to 150°C and the reaction was effected for 20 hours while removing reaction generated water. Next, 0.3 g of hydroquinone methyl ether and 12.3 g methacrylic acid were charged and the reaction was effected at the same temperature for 10 hours. Thus, 32 g of reaction distilled water (the above reaction generated water) and 209 g of polyamine polyamide methacrylamide were obtained. The obtained polyamine polyamide methacrylamide was dissolved by adding 503 g of water thereto and the temperature was adjusted to 50°C. 127 g of ethylene oxide were introduced successively over 2 hours and the reaction mixture was aged further for 2 hours. Thus, 839 g (solid content: 40%) of an aqueous solution of polyamide polyamine D were obtained.

### [Production Example 1-5 (production of polyalkylene polyamine A)]

Into a reaction vessel with a stirring apparatus, which is equipped with a nitrogen introducing tube and an ethylene oxide blowing tube, 1000 g of polyethylene imine (trade name: Epomin SP-012; manufactured by Nippon Shokubai Co., Ltd,; having a molecular mass of 1200) and 1511 g of water were charged and after the nitrogen-purge was performed, the temperature was elevated to 60°C. Next, 511 g of ethylene oxide were gradually charged while maintaining the above temperature and after the charging was completed, the reaction mixture was aged at the same temperature for one hour to obtain 3022 g (solid content: 50%) of an aqueous solution of polyalkylene polyamine A.

### [Example 1 (Alkylene oxide modified water-soluble polymer A)]

Into a glass-made autoclave equipped with an ethylene oxide introducing tube, a nitrogen introducing tube and a stirring apparatus, 139 g of water, 197 g of 3-methyl-3-butene-1-ol 100EO adduct, 10.6 g of maleic anhydride and 10,7 g of 14% aqueous solution of sodium persulfate were charged and stirred. The nitrogen-purge was performed to remove oxygen and the reaction was effected at a reaction temperature of 60°C for 6 hours. After the completion of the reaction, the temperature was elevated to 80°C and here, the stirring was continued for one hour. Next, 67 g of water and 31.4 g of an aqueous solution of polyamide polyamine A were added and the reaction mixture was stirred for one hour. Thereafter, the temperature was lowered to 60°C. While maintaining this temperature, 17.2 g of ethylene oxide were blown into the reaction mixture which was then aged until pH thereof became 5 or more. Thus, 473 g (solid content: 50%) of an aqueous solution of Alkylene oxide modified water-soluble polymer A was obtained.

### [Example 2 (Alkylene oxide modified water-soluble polymer B)]

Into a reaction vessel equipped with an ethylene oxide introducing tube, a nitrogen introducing tube and a stirring apparatus, 286 g of water, 402 g of 3-methyl-3-butene-1-ol 50EO adduct, 59.6 g of maleic acid, 6.62 g of maleic anhydride and 22.2 g of 14% aqueous solution of sodium persulfate were charged. The nitrogen-purge was performed to remove oxygen and the reaction was effected at a reaction temperature of 60°C for 6 hours. After the completion of the reaction, the temperature was elevated to 80°C and here, the reaction mixture was aged for one hour. Next, 190 g of water, 26.7 g of an aqueous solution of polyamide polyamine B and 25.0 g of 48% sodium hydroxide aqueous solution were added and the reaction mixture was stirred for one hour. Thereafter, the temperature was lowered to 60°C. While maintaining this temperature, 20.5 g of ethylene oxide were blown into the reaction mixture which was then aged until pH thereof became 7 or more. Thus, 1039 g (solid content: 50%) of an aqueous solution of alkylene oxide modified water-soluble polymer B was obtained.

### [Example 3 (Alkylene oxide modified water-soluble polymer C)]

Into a reaction vessel with a stirring apparatus, which is equipped with an ethylene oxide introducing tube, a nitrogen introducing tube and a dropping funnel, 286 g of water, 402 g of 3-methyl-3-butene-1-ol 50EO adduct, 59.6 g of maleic acid and 22.2 g of 14% aqueous solution of sodium persulfate were charged. The nitrogen-purge was performed to remove oxygen and the temperature was elevated to 60°C. While dropping 6,62 g of glycidyl methacrylate into the reaction mixture and the reaction was effected for 6 hours. After the completion of the reaction, the temperature was elevated to 80°C and here, the reaction mixture was aged for one hour. Next, 194 g of water, 26.7 g of an aqueous solution of polyamide polyamine C and 25.0 g of 48% sodium hydroxide aqueous solution was added and the reaction mixture was stirred for one hour. Thereafter, the temperature was lowered to 60°C. While maintaining this temperature, 23.6 g of ethylene oxide were blown into the reaction mixture which was then aged until pH thereof became 7 or more. Thus, 1046 g (solid content: 50%) of an aqueous solution of alkylene oxide modified water-soluble polymer C was obtained.

### [Example 4 (Alkylene oxide modified water-soluble polymer D)]

Into a reaction vessel with a stirring apparatus, which is equipped with a thermometer, a dropping funnel, an ethylene oxide introducing tube and a nitrogen introducing tube, 242 g of ion-exchanged water, 500 g of 3-methyl-3-butene-1-ol 35EO adduct, 57.6 g of maleic acid and 6.40 g of maleic anhydride were charged. The nitrogen-purge was performed to remove oxygen and the temperature was elevated to 60°C. To the reaction mixture, an aqueous solution in which 8.6 g of ammonium persulfate was dissolved in 365 g of ion-exchanged water was dropped over 3 hours. Next, the temperature was maintained at 60°C for 3 hours and then, elevated to 80°C to age the reaction mixture for one hour, Thereafter, the temperature was lowered to 60°C and to the reaction mixture, 31.4 g of an aqueous solution of polyalkylene polyamine A was added and the reaction mixture was mixed for 30 minutes. Thereafter, at the same temperature, 34.6 g of ethylene oxide was blown into the reaction mixture which was then aged until pH thereof became 5 or more. Thus, 1246 g (solid content: 50%) of an aqueous solution of alkylene oxide modified water-soluble polymer D was obtained.

### [Example 5 (Alkylene oxide modified water-soluble polymer E)]

Into a reaction vessel with a stirring apparatus, which is equipped with a thermometer, a dropping funnel, an ethylene oxide introducing tube and a nitrogen introducing tube, 271 g of ion-exchanged water, 500 g of 3-methyl-3-butene-1-ol 50EO adduct and 6.40 g of maleic anhydride were charged. The nitrogen-purge was performed to remove oxygen and the temperature was elevated to 60°C. To the reaction mixture, 57.6 g of acrylic acid and an aqueous solution in which 8.6 g of ammonium persulfate was dissolved in 321 g of ion-exchanged water was dropped each over 3 hours. Next, the temperature was maintained at 60°C for 3 hours and then, elevated to 80°C to age the reaction mixture for one hour. Thereafter, the temperature was lowered to 60°C and to the reaction mixture, 31.4 g of an aqueous solution of polyamide polyamine B was added and the reaction mixture was mixed for 30 minutes. Thereafter, at the same temperature, 20.5 g of ethylene oxide was blown into the reaction mixture which was then aged until pH thereof became 5 or more. Thus, 1217 g (solid content: 50%) of an aqueous solution of alkylene oxide modified water-soluble polymer E was obtained.

### [Example 6 (Alkylene oxide modified water-soluble polymer F)]

Into a reaction vessel with a stirring apparatus, which is equipped with a nitrogen introducing tube and a thermometer, 1270 g of water was charged and the temperature was elevated to 90°C in a nitrogen atmosphere. Into the reaction vessel, 3 liquids such as a mixture containing 500 g of a polyamide polyamine aqueous solution, 159 g of methacrylic acid, 600 g of methoxypolyethyleneglycol monomethacrylate (methacrylic acid ester of methoxypolyethyleneglycol (molecular mass: 1000)) and 160 g of water; 400 g of a 5% ammonium thioglycolate aqueous solution; and 400 g of a 5% ammonium persulfate aqueous solution, were dropped over 2 hours and after the completion of the dropping, the reaction mixture was aged for one hour at the same temperature. Thereafter, the temperature was lowered to 60°C and the reaction mixture was neutralized using 74 g of a 48% sodium hydroxide aqueous solution. While maintaining the same temperature, 40.7 g of ethylene oxide was introduced into the reaction mixture which was then aged until pH thereof became 7 or more. Thus, 3604 g (solid content: 30%) of an aqueous solution of alkylene oxide modified water-soluble polymer F was obtained.

### [Comparative Example 1 (Comparative water-soluble polycarboxylic acid polymer A)]

Into a glass-made autoclave equipped with an ethylene oxide introducing tube, a nitrogen introducing tube and a stirring apparatus, 134 g of water, 191 g of 3-methyl-3-butene-1-ol 50EO adduct, 20,2 g of maleic anhydride and 10.4 g of 14% aqueous solution of sodium persulfate were charged and stirred. The nitrogen-purge was performed to remove oxygen and the reaction was effected at a reaction temperature of 60°C for 6 hours. After the completion of the reaction, the temperature was elevated to 80°C and here, the reaction mixture was aged for one hour. The temperature was lowered to 60°C and 70 g of water was added to the reaction mixture which was mixed. Thus, 426 g (solid content: 50%) of an aqueous solution of water-soluble polycarboxylic acid polymer A of Comparative Example was obtained.

### [Mortar flow test]

The alkylene oxide modified water-soluble polymers A to F (Polymers A to F) obtained respectively in Examples 1 to 6 and the comparative water-soluble carboxylic acid polymer A (Comparative polymer A) were compared according to the below-described mortar flow test.

### [Test conditions and measuring method

200 g of ordinary Portland cement (manufactured by Taiheiyo Cement Corporation) and 260 g of silica sand N. 6 (manufactured by Nippon Plaster Co., Ltd.) were weighed and taken, and were dry-mixed for 90 seconds. In addition, 0.448 g (as solid content) of each of the polymer A and the comparative polymer were weighed and taken, and a mixing water was prepared in an amount so that when each of them is diluted with water, the total amount becomes 86 g, respectively. The mixture of the cement and the sand were poured into the mixing water and the resultant mixture was mixed for 180 seconds to prepare two types of the mortar pastes.
Each kneaded-up mortar paste was poured into a hollow cylindrical container having a size of φ50 mm×H50 mm and placed at the center of an acryl resin plate and the container was filled with the mortar paste completely full. After the filling was completed, the hollow cylindrical container was lifted with a constant rate and it was waited that the spread of the mortar comes completely to rest. Then, the maximum diameter of the spread of the mortar and the diameter of the spread perpendicular to the above maximum diameter were measured to require the average diameter (mortar flow value). This operation was performed immediately after the production of the mortar paste, and after 60 minutes and 120 minutes have passed. Here, the kneading after each time passed was performed for 90 seconds. The obtained results are shown in Table 1,

### [Results of mortar flow test]

The present results of mortar flow test show that Polymers A to F had low initial dispersibility values, although excellent in the persistence of the slump flow from after 60 minutes have passed to after 120 minutes have passed.
On the other hand, Comparative polymers A and B showed the results that the slump flow values thereof lowered from after 60 minutes had passed to after 120 minutes had passed.
[Table 1]

**[Table 1: Results of mortar flow test]**

| | Slump flow value (mm) | | |
|---|---|---|---|
| | Immediately after mortar paste production | After 60 minutes had passed | After 120 minutes had passed |
| Polymer A | 63 | 159 | 156 |
| Polymer B | 120 | 162 | 155 |
| Polymer C | 103 | 152 | 145 |
| Polymer D | 80 | 124 | 118 |
| Polymer E | 110 | 163 | 157 |
| Polymer F | 72 | 175 | 168 |
| Comparative Polymer A | 155 | 167 | 149 |

### [Evaluation by concrete test]

Example 1-1 was prepared by blending the Alkylene oxide modified water-soluble polymer A (Polymer A) obtained in Example 1 and Sikament 1200N (manufactured by Sika Ltd. Japan), which is a cement dispersing agent other than those of the present invention, in a solid content mass ratio of 4 : 1 and Comparative Example 1-1 was prepared by using the comparative water-soluble polycarboxylic acid polymer (Comparative polymer A) obtained in Comparative Example 1. Each of them was subjected to the below-described concrete test and the results thereof were compared.
The kneading of the concrete was performed using a 55L forced double-screw mixer by adding water containing Example 1-1 or Comparative Example 1-1 to a coarse aggregate, a cement and a fine aggregate and by kneading the resultant mixture for 90 seconds. Thereafter, immediately after the discharge of the concrete, after 30 minutes, 60 minutes, 90 minutes and 120 minutes had passed, the concrete was subjected to the fresh concrete test (slump test: JIS A1101, air amount: JIS A1128), In addition, the compressive strength (JIS A1 108) of the concrete was confirmed.

### [Test results of concrete test]

The formulation of the concrete, the results of the fresh concrete test and the results of the compressive strength test are shown in Tables 2 to 4, respectively.
[Table 2]

**[Table 2: Formulation of concrete]**

| W/C | s/a | Unit amount (kg/m³) | | | |
|---|---|---|---|---|---|
| (%) | (%) | Water | Cement | Fine aggregate | Coarse aggregate |
| 45 | 47.6 | 165 | 367 | 847 | 954 |

| | | | | | |
|---|---|---|---|---|---|
| Cement: Ordinary Portland cement (manufactured by Taiheiyo Cement Corporation density: 3.16 g/cm³) Fine aggregate: Land sand (product in Kimitsu, density: 2.64 g/cm³) Coarse aggregate: Crushed limestone (product in Torigatayama, density 2.70 g/cm³) | | | | | |

[Table 3]

**[Table 3: Results of fresh concrete test]**

| | Added amount *) (%) | 0 minute | | 30 minutes | | 60 minutes | | 90 minutes | | 120 minutes | |
|---|---|---|---|---|---|---|---|---|---|---|---|
| | | Slump (cm) | Air amount | Slump (cm) | Air amount | Slump (cm) | Air amount | Slump (cm) | Air amount | Slump (cm) | Air amount |
| | | | (%) | | (%) | | (%) | | (%) | | (%) |
| Example 1-1 | 0.2 | 21.0 | 5.0 | 23.0 | 4.8 | 23.0 | 4.8 | 22.0 | 4.5 | 20,5 | 4.2 |
| Comparative Example 1-1 | 0.2 | 22.0 | 4.5 | 23.5 | 4.1 | 19.0 | 4.4 | 15.0 | 4.6 | 11.5 | 5.0 |

| | | | | | | | | | | | |
|---|---|---|---|---|---|---|---|---|---|---|---|
| *) added amount (solid content) of dispersing agent relative to the mass of the cement: % by mass | | | | | | | | | | | |

[Table 4]

**[Table 4: Results of compressive strength test]**

| | Compressive strength (N/mm²) | |
|---|---|---|
| | Material age 7 days | Material age 28 days |
| Example 1-1 | 34.3 | 45.2 |
| Comparative Example 1-1 | 32.2 | 44.3 |

### [Results of mortar flow test and concrete test]

As shown in the result in the above [Table 1], in the mortar paste using Comparative Example 1 (Comparative polymer A: conventional cement dispersing agent), though the dispersibility of immediately after the production of the mortar paste was excellent, the slump flow value rapidly lowered from the maximum value of after 60 minutes had passed. On the other hand, in the mortar pastes using Polymers A to F (cement dispersing agents of the present invention), though the initial dispersibility was low, the slump flow values of after 120 minutes had passed were substantially the same as those of after 60 minutes had passed, exhibiting extremely excellent slump loss reducing effect (that is, the effect of maintaining the slump flow value at a high level for a long period).
Also in the concrete test shown in Table 3, the similar slump loss reducing results were obtained. In the concrete using the Comparative Example 1-1, the slump loss of after 60 minutes had passed become already a considerable value relative to that of after 30 minutes had passed, while in the concrete using Polymer A, the slump value of after 120 minutes had passed was substantially the same slump value as that of immediately after the production of the mortar paste or that of after 30 to 60 minutes had passed which was the maximum slump value. Further, the results were obtained that the concrete using polymer A exhibited a compressive strength competitive with that of a conventional product (Comparative Example 1-1).
Thus, Polymer A corresponding to the cement dispersing agent of the present invention exhibited excellent slump maintaining property with time without affecting the strength of the concrete.

## Claims

1. A cement dispersing agent comprising:
an alkylene oxide modified water-soluble polymer having a structure composed of:
a polymer skeleton containing a water-soluble polycarboxylic acid polymer grafted and/or crosslinked with a compound having amino and imino groups and/or a compound having amino, imino and amido groups; and
an alkylene oxide that is further added to the polymer skeleton.

2. The cement dispersing agent according to claim 1, wherein the compound having amino and imino groups is a polyalkylene polyamine.

3. The cement dispersing agent according to claim 1, wherein the compound having amino, imino and amido groups is a polyamide polyamine.

4. The cement dispersing agent according to claim 2, wherein the polyalkylene polyamine includes a polyalkylene polyamine to which a polyalkylene oxide is added.

5. The cement dispersing agent according to claim 3, wherein the polyamide polyamine includes a polyamide polyamine to which a polyalkylene oxide is added.

6. The cement dispersing agent according to any one of claims 2 to 5, wherein the polyalkylene polyamine or the polyamide polyamine has a molecular weight of 900 to 10,000.

7. The cement dispersing agent according to any one of claims 1 to 6, wherein the water-soluble polycarboxylic acid polymer has at least one substituent selected from a group consisting of (anhydrous) carboxylic acid group and salts thereof, a polyoxyalkylene group, a carboxylic acid alkyl ester group, an alkyl group and a glycidyl group.

8. The cement dispersing agent according to any one of claims 1 to 7, wherein the water-soluble polycarboxylic acid polymer is a water-soluble copolymer produced by copolymerizing monomers, as main components, represented by the general formulae (1) and (2): 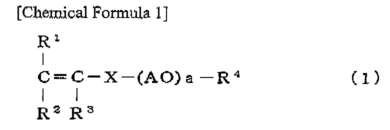 wherein R¹, R², R³, and R⁴ independently represent a hydrogen atom or a (C1-22) hydrocarbon group; X represents -COO-, -CON<, -(CH₂)_{b}O-; AO represents a (C2-4) alkylene oxide group; a represents an average added molar number of an alkylene oxide of 1 to 200; and b represents 1 to 20, 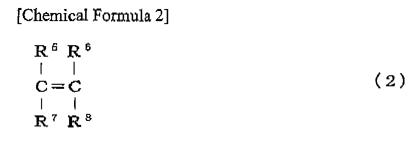 wherein R⁵, R⁶, R⁷, and R⁸ independently represent a (C1-22) hydrocarbon group, -(CH₂)_{c}-COOM, -COOM, -COOR⁹ (wherein R⁹ represents a (C 1-22) hydrocarbon group, -(CH₂)_{c}-COOM, -COOM or a glycidyl group) or a glycidyl group, or R⁵ and R⁶ or R⁷ and R⁸ together with a >C=C< group in the formula (2) form an acid anhydride; c represents 1 to 20; and M represents a hydrogen atom, an alkali metal, an alkaline earth metal, ammonium or an alkanolamine.

9. The cement dispersing agent according to any one of claims 1 to 8, wherein the alkylene oxide further added to the skeleton is a (C2-4) alkylene oxide.

10. The cement dispersing agent according to claim 9, wherein in the component represented by the general formula (1) which is a monomer component of the water-soluble polycarboxylic acid polymer, the average added molar number of the alkylene oxide is 30 to 150 and the average added molar number of the alkylene oxide added to the polyalkylene polyamine or the polyamide polyamine is 0.1 mol to 10 mol relative to 1 mol of the total of an amino group and an imino group and optionally an amido group.

11. A concrete admixture comprising:
the cement dispersing agent according to any one of claims 1 to 10; and
an admixture such as a cement dispersing agent other than the above cement dispersing agent, an air-entraining agent, a setting retarder, an accelerator, a separation-diminishing agent, a thickener, an antifoamer and a contraction-diminishing agent.
